# EUROPÄISCHE PATENTSCHRIFT

(11) **EP 3 810 969 B1**
(45) Veröffentlichungstag und Bekanntmachung des Hinweises auf die Patenterteilung: **03.07.2024**
(21) Anmeldenummer: 19728904.4
(22) Anmeldetag: 27.05.2019
(51) Int. Cl.: F16L 37/00, F16L 37/252

(54) **VERBINDUNGSANORDNUNG ZUM AUSBILDEN EINER FLUIDFÜHRENDEN VERBINDUNG UND VERFAHREN**
CONNECTION ARRANGEMENT FOR FORMING A FLUIDIC CONNECTION AND METHOD
AGENCEMENT DE RACCORDEMENT POUR RÉALISER UN RACCORD FLUIDIQUE ET PROCÉDÉ

(30) Priorität: 21.06.2018 DE 102018114918
(43) Veröffentlichungstag der Anmeldung: 28.04.2021
(73) Patentinhaber: NORMA Germany GmbH, 63477 Maintal (DE)
(72) Erfinder: ANDERSSON, Sven-Bertil, 33574 Gnosjö Hillerstorp (SE)
(74) Vertreter: Patentanwälte Olbricht Buchhold Keulertz
(86) Internationale Anmeldenummer: PCT/EP2019/063642
(87) Internationale Veröffentlichungsnummer: WO 2019/242998

(56) Entgegenhaltungen:
- DE-A1-102004 016 051
- DE-A1-102004 055 409
- DE-A1-102013 215 955
- US-A- 3 232 644
- US-A- 3 650 551
- US-A1- 2010 102 555
- US-B1- 6 669 239

## Beschreibung

Die Erfindung betrifft eine Verbindungsanordnung zum Ausbilden einer fluidführenden Verbindung zwischen einem Behälter mit einer Fluidleitung gemäß dem Oberbegriff des Anspruchs 1 sowie ein Verfahren zum fluidführenden Verbinden von einem Verbindungselement mit einem Wandelement.

Es sind verschiedene Möglichkeiten zum Anbinden einer Fluidleitung an einen Behälter bekannt. Insbesondere werden hierfür rohrartige Stutzen eingesetzt, welche endseitig einen Schlauch oder ein Rohr aufnehmen können. Mit Hilfe eines Schraubgewindes oder eines Flansches können derartige Stutzen am Behälter befestigt werden.

Des Weiteren sind Stutzen bekannt, welche stoffschlüssig mit einem Behälter verbindbar sind. Die stoffschlüssige Verbindung kann durch Kleben, Löten oder Schweißen hergestellt werden. Als eine weitere Lösung ist eine integrale Ausgestaltung des Behälters mit dem Stutzen bekannt.

Problematisch an den bekannten Ausführungen einer Verbindungsanordnung sind jedoch ein erhöhter Montageaufwand und/oder ein erhöhter Herstellungsaufwand. Ein erhöhter Montageaufwand kann durch eine umständliche Verschraubung oder eine nachträgliche stoffschlüssige Verbindung des Stutzens am Behälter resultieren. Dabei müssen insbesondere mehrere Arbeitsschritte durchgeführt werden, welche ein Anordnen und Halten des Stutzens an einer Anbauposition und ein anschließendes Verschrauben oder Verkleben des Stutzens mit dem Behälter beinhalten.

US 3 650 551 A beschreibt eine Armatur mit einem Gewindeabschnitt, der es ermöglicht, die Armatur in eine Öffnung in einer Wand eines Tanks einzuschrauben und dauerhaft an dieser zu fixieren. Der Verbinder enthält auch eine elastische Dichtung, die an der Außenseite des Tanks liegt und zwischen der Tankwand und einem Flanschabschnitt der Armatur gehalten und von dieser zur flüssigkeitsdichte Abdichtung zusammengedrückt wird.

Aus US 3,232,644 A ist eine Vorrichtung zum schnellen Befestigen eines rohrförmigen Elements mit einem Ventil an einem Gefäß mit einer geraden Wand bekannt. Hierzu wird ein Rückschlagventilkörper mit einem Flansch in eine Öffnung der Gehäusewand eingesetzt und dort verriegelt.

DE 10 2004 055409 A1 offenbart einen Bremskraftverstärker mit einem pneumatischen Anschluss, welcher in einer Öffnung eines Gehäuses verdrehsicher angeordnet ist. Der pneumatische Anschluss wird mittels einer Bajonettverbindung im Gehäuse verrastet.

DE 10 2013 215955 A1 beschreibt ein Wanddurchführungselement für eine Fluidleitung mit einem Gehäuse, das einen in Axialrichtung verlaufenden Durchsteckbereich mit einer Befestigungsvorrichtung und einen Anschlag aufweist. Die Befestigungsvorrichtung ist so ausgestaltet, dass die Wanddurchführung einfach erzeugt werden kann.

In US 6 669 239 B1 wird eine Vorrichtung beschrieben, mit der eine Leitung sich durch eine Wand erstrecken kann, während um die Leitung herum eine Abdichtung vorgesehen ist. Die Leitung ist mit einem Verbindungselement verbunden, dass sich durch eine in der Wand angeordnete Öffnung erstreckt.

DE 10 2004 016051 A1 offenbart einen Bremskraftverstärker mit einem pneumatischen Anschluss, welcher in einer Öffnung eines Gehäuses des Bremskraftverstärkers mittels eines Dichtelementes dicht angeordnet ist. Der pneumatische Anschluss weist zur Befestigung federnde Rastelemente sowie mindestens ein Positionierelement au, wobei der pneumatische Anschluss mittels der Rastelemente in das Gehäuse einrastbar ist.

US 2010/0102555 A1 beschreibt einen komplexen Rohranschluss aus einer Vielzahl von Bauteilen. Der Schlauchanschluss weist einen Hauptkörper, der rohrförmig ausgebildet ist, und ein Schraubteil zur Befestigung auf. Das Schraubteil wird in eine Seite des Hauptkörpers gesteckt, während das äußere Rohr in ein Öffnungsteil an der anderen Seite des Hauptkörpers eingeführt wird. Das Schraubteilweist ein Außengewinde zum Schrauben in eine Behälterwand auf.

Aufgabe der Erfindung ist es daher, die Nachteile des Standes der Technik zu beseitigen und eine Verbindungsanordnung bereitzustellen, welche schnell und mit einem geringen Montageaufwand umsetzbar ist.

Hauptmerkmale der Erfindung sind im kennzeichnenden Teil von Anspruch 1 und im Anspruch 11 angegeben. Ausgestaltungen sind Gegenstand der Ansprüche 2 bis 10.

Die Erfindung betrifft eine Verbindungsanordnung zum Ausbilden einer fluidführenden Verbindung zwischen einem Behälter und einer Fluidleitung. Die Verbindungsanordnung weist ein in oder an einer Behälterwand des Behälters anordenbares Wandelement mit einer Öffnung und ein rohrförmiges Verbindungselement mit zwei Dichtflächen auf. Das Verbindungselement weist endseitig einen Dichtungsabschnitt auf, welcher umfangsseitig am Verbindungselement angeordnet ist und eine axial ausgerichtet Dichtfläche aufweist. An einem dem Dichtungsabschnitt entgegengesetzten Ende des Verbindungselementes ist umfangsseitig eine zweite Dichtfläche ausgestaltet. Erfindungsgemäß weist das Verbindungselement im Bereich der ersten Dichtfläche einen Verbindungsabschnitt zum Einsetzen in die Öffnung des Wandelements und zum Verbinden mit dem Wandelement auf.

Durch das Verbindungselement kann ein Adapter bereitgestellt werden, welcher schnell in das Wandelement ortsfest einsetzbar ist. Im eingesetzten Zustand entsteht zwischen dem Verbindungselement und dem Wandelement eine fluiddichte Verbindung. Insbesondere wird im eingesetzten Zustand des Verbindungselementes die erste Dichtfläche gegen eine ebene Auflagefläche des Wandelementes axial gepresst, wodurch eine fluiddichte Dichtzone ausgebildet wird. Die erste Dichtfläche kann beispielsweise als eine radial umlaufende Nut mit einem O-Ring ausgeführt sein Die axial gerichtete Anpresskraft kann beispielsweise durch ein Verbindungselement erzeugt werden, welches Anpressrampen aufweist. Durch ein Verdrehen des Verbindungselements gegenüber dem Wandelement kann somit der Dichtungsabschnitt gegen das Wandelement angezogen werden. Die Verbindung zwischen dem Verbindungselement und dem Wandelement kann durch eine Drehbewegung oder durch ein Aufbringen von Druck hergestellt werden. Dabei kann der Verbindungsabschnitt eine formschlüssige, kraftschlüssige oder eine reibschlüssige Verbindung mit dem Wandelement eingehen. Der Montageaufwand kann somit reduziert werden, da lediglich ein Bewegungsablauf notwendig ist, um das Verbindungselement am Wandelement zu montieren. Dieser Bewegungsablauf kann vorzugsweise mit einem Positionierungswerkzeug erfolgen, wodurch ein Werkzeugwechsel während der Montage entfallen kann.

Das Wandelement kann vorzugsweise zumindest bereichsweise einen dünnwandigen Abschnitt zum Aufnehmen des Verbindungsabschnitts aufweisen. Insbesondere kann das Wandelement an einer Behälterwand anbringbar sein oder als ein Bereich einer Behälterwand ausgestaltet sein. Alternativ kann das Wandelement in eine Aussparung in einer Wand, wie beispielsweise einer Behälterwand, eines Raumes, einer Karosserie und dergleichen, formschlüssig einbringbar sein.

Die erfindungsgemäße Verbindungsanordnung kann insbesondere zum fluidführenden Anbinden von Tanks oder Behältern, als sekundäre Luftzufuhr, Drainageleitung, Transportleitung für beispielsweise Öl oder Treibstoff, als eine Belüftungsleitung und dergleichen eingesetzt werden.

Vorzugsweise ist das Verbindungselement im Wesentlichen rotationssymmetrisch ausgestaltet. Das Wandelement durch Spritzguss, Metallguss, Stanz- und Biegeverfahren und dergleichen herstellbar sein. Die Verbindungsanordnung kann hierdurch mit einer wiederholbaren und optimierten Qualität hergestellt und montiert werden.

Gemäß einer bevorzugten Ausgestaltung ist der Verbindungsabschnitt mit dem Wandelement formschlüssig oder kraftschlüssig verbindbar. Hierdurch kann eine besonders schnelle Montage des Verbindungselements an dem Wandelement realisiert werden. Beispielsweise kann der Verbindungsabschnitt des Verbindungselements durch die Öffnung des Wandelements hindurchragen und am Wandelement einrasten oder einhaken. Alternativ oder zusätzlich kann der Verbindungsabschnitt in die Öffnung des Wandelements eingepresst werden.

Das Verbindungselement kann besonders schnell und effizient am Wandelement montiert werden, wenn der Verbindungabschnitt des Verbindungselementes und die Öffnung des Wandelements als ein Bajonettverschluss ausgestaltet sind. Die Verbindung kann somit durch eine Steck-Dreh-Bewegung erfolgen, wobei der Verbindungsabschnitt in die Öffnung hineingesteckt und anschließend durch ein Verdrehen am Wandelement arretiert wird. Eine derartig ausgestaltete Verbindungsanordnung kann sowohl als eine lösbare oder eine nicht mehr nachträglich lösbare Verbindung zwischen dem Verbindungselement und dem Wandelement ausgestaltet sein.

Die Verbindung erfolgt über eine Steck-Dreh-Bewegung: Die beiden zu verbindenden Teile werden ineinander gesetzt; annähernd senkrecht zur Steckrichtung sind in beiden Teilen an der Verbindungsstelle längliche Erhebungen angebracht. Diese laufen jedoch nicht rundum, sondern sind unterbrochen (sonst wäre das Ineinanderstecken nicht möglich). Da die Erhebungen nun leicht schräg in der Ebene senkrecht zur Steckrichtung liegen, werden durch eine Drehbewegung beide Teile gegeneinandergepresst. Der Bajonettverschluss arbeitet also wie ein Gewinde. Manchmal (zum Beispiel bei Kamera-Objektiven) wird zur Sicherung der Verbindung zusätzlich eine Raste verwendet. Alternativ zum Verfahren der ineinandergreifenden Schienen kann auch eine entsprechend geformte Einbuchtung am einen und eine Ausbuchtung am anderen Teil verwendet werden

Nach einer weiteren Ausgestaltung der Verbindungsanordnung weist die Öffnung des Wandelements mindestens eine Aussparung zum Aufnehmen von mindestens einem Vorsprung des Verbindungsabschnitts auf. Das Verbindungselement ist durch ein Verdrehen des Verbindungselements entlang einer Symmetrieachse gegenüber dem Wandelement am Wandelement lösbar oder unlösbar arretierbar. Bevorzugterweise ist am Verbindungsabschnitt endseitig mindestens eine Anpressrampe angeordnet, welche durch ein Verdrehen des Verbindungselements eine axial gerichtete Anpresskraft erzeugt und zum Ausbilden einer fluiddichten Verbindung den Dichtungsabschnitt gegen das Wandelement presst. Die Öffnung weist mindestens eine Aussparung und mindestens einen Konterabschnitt zum Wechselwirken mit der mindestens einen Anpressrampe auf. Vorzugsweise sind die Aussparungen und die Konterabschnitte abwechselnd und umfangsseitig an der Öffnung angeordnet. Zum Umsetzen einer Rastverbindung kann die mindestens eine Anpressrampe eine Rastnase aufweisen, welche mit der mindestens einen Aussparung oder dem mindestens einen Konterabschnitt formschlüssig koppelbar ist.

Die Verbindungsanordnung kann ohne ein Kleben oder Schweißen hergestellt werden, wenn im verbundenen Zustand zwischen dem Dichtungsabschnitt des Verbindungselements und dem Wandelement eine fluiddichte Dichtzone ausbildbar ist. Die am Dichtungsabschnitt angeordnete und dem Wandelement zugewandte erste Dichtfläche kann beispielsweise durch eine Flachdichtung oder einen O-Ring ausgestaltet sein.

Gemäß einer weiteren Ausgestaltung der Verbindungsanordnung ist die zweite Dichtfläche dazu ausgebildet eine Fluidleitung aufzunehmen. Die Fluidleitung kann hierbei auf einem Abschnitt des Verbindungselements angeordnet werden, welcher von der zweiten Dichtfläche umfangseitig begrenzt ist. Die Fluidleitung kann direkt auf den Abschnitt hinaufgeschoben oder indirekt über einen Kupplungsabschnitt mit dem Verbindungselement verbindbar sein. Es können zusätzliche Befestigungsmittel, wie beispielsweise Kabelbinder oder Schlauchschellen, zum Fixieren oder zum Sichern der Fluidleitung eingesetzt werden. Hierdurch kann eine zusätzliche mechanische Festigkeit der am Verbindungselement angeordneten Fluidleitung gewährleistet werden.

Die Verbindungsanordnung kann flexibel und vielseitig eingesetzt werden, wenn der Behälter ein Tank, ein Gefäß, ein Raum oder zumindest ein Bereich einer Karosserie ist.

Nach einer weiteren Ausgestaltung der Verbindungsanordnung ist die zweite Dichtfläche als ein SAE-Verbindung, eine VDA-Verbindung, ein Schlauchstutzen oder eine V2-Verbindung ausgeformt. Hierdurch kann das Verbindungselement unabhängig vom Wandelement herstellbar sein und an ein Einsatzgebiet der Verbindungsanordnung angepasst einsetzbar sein. Insbesondere können hierdurch unterschiedlich ausgestaltete Fluidleitungen und Kupplungssysteme von Fluidleitungen mit dem Verbindungselement koppelbar sein. Des Weiteren können in ein Wandelement unterschiedlich geformte Verbindungselemente wahlweise bzw. bei Bedarf eingesetzt werden.

Das Verbindungselement kann ortsfest und gegen ein Lösen gesichert am Wandelement angeordnet werden, wenn der Verbindungsabschnitt des Verbindungselementes mindestens ein Rastelement zum Ausbilden einer Rastverbindung mit dem Wandelement aufweist. Insbesondere kann das mindestens eine Rastelement als eine Rastnase im Bereich einer Anpressrampe des Verbindungsabschnitts ausgeführt sein. Die Rastnase kann vorzugsweise mit einem Konterabschnitt oder einer Aussparung der Öffnung des Wandelements wechselwirken.

Die Montage des Verbindungselements am Wandelement kann vereinfacht und beschleunigt werden, weil das rohrförmige Verbindungselement in einem Innenbereich ein Innenprofil zum verdrehsicheren Aufnehmen eines Werkzeugkopfes aufweist. Beispielsweise kann das Innenprofil als ein eckiges Profil ausgebildet sein, welches entsprechend einem Werkzeugkopf ausgeführt ist. Das Profil kann beispielsweise ein rechteckiges, dreieckiges oder ein sechseckiges Innenprofil aufweisen. Des Weiteren kann das Innenprofil axial verlaufende Aussparungen zum verdrehsicheren Aufnehmen des Werkzeugkopfes aufweisen. Der Werkzeugkopf kann zumindest bereichsweise formschlüssig in den Innenbereich des Verbindungselementes eingesetzt und zum Montieren des Verbindungselementes verwendet werden.

Die Verbindungsanordnung kann besonders vielseitig herstellbar sein, wenn das Wandelement in eine Behälterwand des Behälters einlassbar, als ein Abschnitt der Behälterwand ausgeführt oder stoffschlüssig mit der Behälterwand verbindbar ist. Insbesondere kann durch die Verbindungsanordnung der Einsatz von einer Flanschverbindung bzw. einer Schraubverbindung entfallen, wodurch die Verbindungsanordnung platzsparend ausgestaltet ist.

Weiterhin betrifft die Erfindung ein Verfahren zum fluidführenden Verbinden von einem Verbindungselement mit einem Wandelement. In einem Schritt wird ein Werkzeugkopf in einem Innenbereich des Verbindungselements verdrehsicher angeordnet. Das Verbindungselement wird durch den Werkzeugkopf in einer Öffnung des Wandelements, die sich durch das Wandelement ersteckt, derart angeordnet, dass ein Verbindungsabschnitt des Verbindungselements durch die Öffnung hindurchragt. Anschließend wird das Verbindungselement durch eine Rotationsbewegung des Werkzeugkopfes relativ zum Wandelement verdreht und am Wandelement arretiert.

Durch das Verdrehen des Verbindungselements können Anpressrampen eines Verbindungsabschnitts des Verbindungselementes, welche durch Aussparungen der Öffnung in das Wandelement eingesetzt werden, mit dem Wandelement mechanisch wechselwirken. Ein Verdrehen des Verbindungselements führt dazu, dass sich die Anpressrampen mit Konterabschnitten der Öffnung bzw. des Wandelementes überlappen und somit das Verbindungselement am Wandelement arretieren.

Durch das erfindungsgemäße Verfahren kann eine einfache und schnelle Montage des Verbindungselementes am Wandelement durchgeführt werden. Die hierfür notwendigen Bewegungsabläufe können automatisiert erfolgen. Die Positionierung des Verbindungselementes in der Öffnung und ein anschließendes Drehen des Verbindungselementes kann vorzugsweise ohne einen Werkzeugwechsel erfolgen.

Das Wandelement und das Verbindungselement können aus einem gleichen oder einem unterschiedlichen Material bestehen. Insbesondere kann als Material ein Kunststoff oder ein Metall eingesetzt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Darstellung eines Wandelementes einer erfindungsgemäßen Verbindungsanordnung gemäß einer Ausführungsform,
- Fig. 2: Darstellungen von Verbindungselementen der erfindungsgemäßen Verbindungsanordnung,
- Fig. 3: eine Draufsicht auf ein Werkzeug zum Montieren des Verbindungselements an dem Wandelement,
- Fig. 4: eine schematische Schnittdarstellung der Verbindungsanordnung,
- Fig. 5: perspektivische Darstellungen von erfindungsgemäßen Verbindungselementen gemäß weiteren Ausführungsformen und
- Fig. 6: Darstellungen zum Veranschaulichen des erfindungsgemäßen Verfahrens.

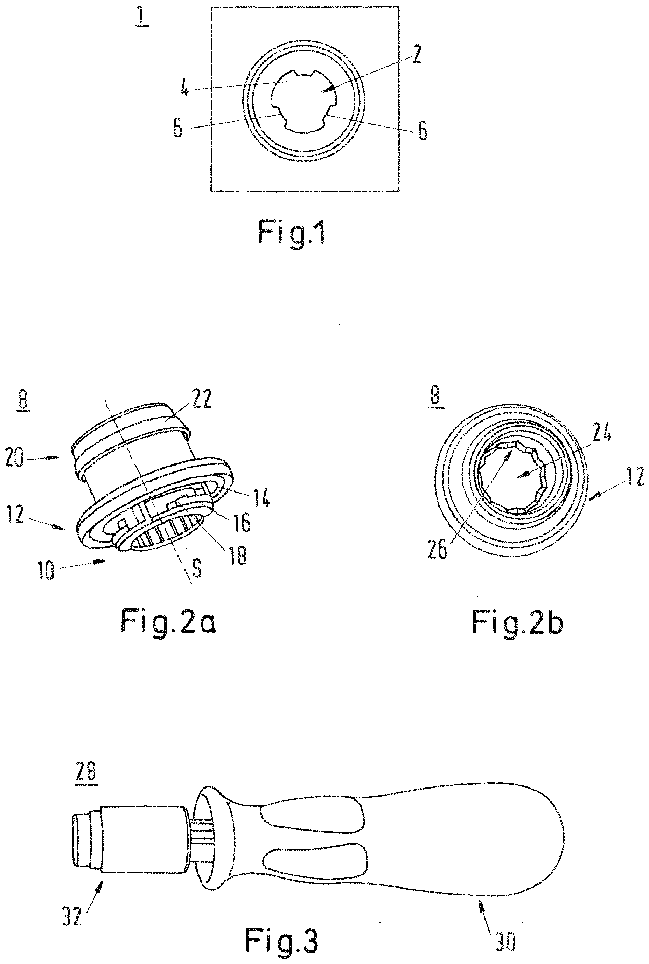

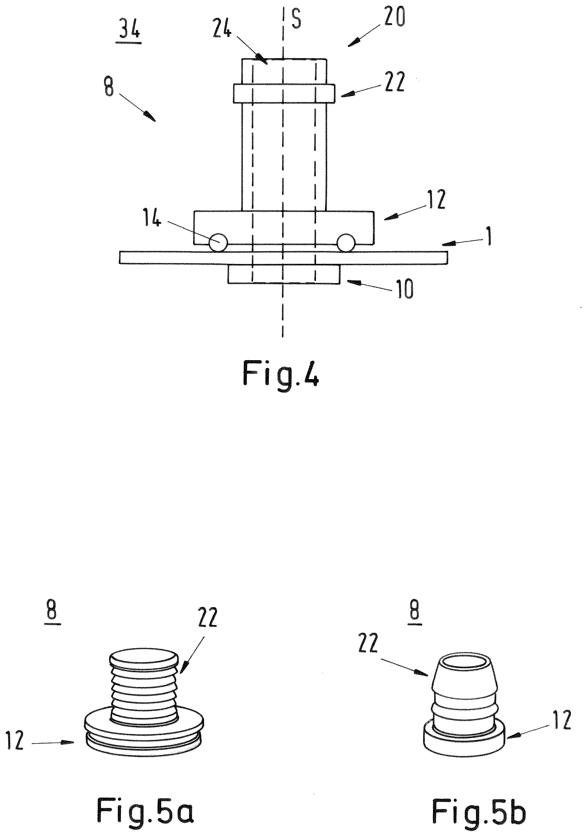

Die Fig. 1 zeigt ein erfindungsgemäßes Wandelement 1 einer in Fig. 4 dargestellten Verbindungsanordnung. Das Wandelement 1 ist quadratisch geformt und weist eine Öffnung 2 auf, welche sich durch das Wandelement 1 zentriert hindurch erstreckt. Umfangsseitig sind an der Öffnung 2 drei Aussparungen 4 eingebracht. Zwischen den drei Aussparungen ist jeweils ein Konterabschnitt 6 ausgebildet. Die Aussparungen 4 sind gemäß dem Ausführungsbeispiel umfangsseitig gleichmäßig bzw. symmetrisch verteilt. Alternativ können die mindestens eine Aussparung 4 und der mindestens ein Konterabschnitt 6 unsymmetrisch an der Öffnung 2 angeordnet sein.

Das Wandelement 1 kann beispielsweise als eine Behälterwand ausgestaltet sein. Alternativ kann das Wandelement 1 an einer Behälterwand positionierbar oder in eine Behälterwand einsetzbar sein. Dabei kann das Wandelement 1 stoffschlüssig oder kraftschlüssig mit der Behälterwand verbindbar sein.

In der Fig. 2a und Fig. 2b sind Darstellungen eines rohrförmigen Verbindungselementes 8 aus unterschiedlichen Perspektiven gezeigt. Das Verbindungselement 8 ist im Wesentlichen entlang einer Symmetrieachse S symmetrisch geformt. Das Verbindungselement 8 weist einen Verbindungsabschnitt 10 auf, welcher sich von einem Dichtungsabschnitt 12 axial erstreckt. Der Dichtungsabschnitt 12 weist eine größere Querschnittsfläche auf als der Verbindungsabschnitt 10. Am Dichtungsabschnitt 12 ist eine erste Dichtfläche 14 ausgestaltet. Die erste Dichtfläche 14 ist als ein O-Ring ausgeprägt. Der O-Ring ist in einer umlaufenden Nut des Dichtungsabschnittes 12 angeordnet.

Der Verbindungsabschnitt 10 weist drei Vorsprünge 16 auf. Die Vorsprünge 16 sind als Anpressrampen 16 ausgeprägt, welche entsprechend den Aussparungen 4 geformt sind. Die Vorsprünge 16 weisen einen größeren Querschnitt auf als die Konterabschnitte 6 des Wandelementes 1. Hierbei weisen die Vorsprünge 16 einen kleineren Querschnitt auf als die Aussparungen 4, wodurch der Verbindungsabschnitt 10 bei einer korrekten Ausrichtung in die Öffnung einsetzbar ist. Jede Anpressrampe 16 weist ein Rastelement 18 auf. Durch die Rastelemente 18 kann ein unbeabsichtigtes Lösen des Verbindungselementes 8 vermieden werden. Nach einem Drehen des Verbindungselementes 8 gegenüber dem Wandelement 1 sind die Vorsprünge 16 und die Konterabschnitte 6 überlagert ausgerichtet, wodurch ein Trennen des Verbindungselementes 8 vom Wandelement 1 nicht mehr möglich ist.

An einem dem Verbindungsabschnitt 10 entgegengesetzten Ende 20 des Verbindungselements 8 ist eine umfangsseitig umlaufende zweite Dichtfläche 22 angeordnet. Die zweite Dichtfläche 22 ist als ein Vorsprung ausgeprägt und bildet gemäß dem Ausführungsbeispiel einen sogenannten VDA-Verbinder aus. Über die zweite Dichtfläche 22 kann beispielsweise ein (nicht dargestellter) Schlauch bzw. eine Fluidleitung geschoben werden.

Das Verbindungselement 8 weist einen Innenbereich 24 zum Führen von einem Fluid auf. Der Innenbereich 24 weist ein vieleckig geformtes Innenprofil 26 auf.

In Fig. 3 ist ein Werkzeug 28 zum Montieren des Verbindungselements 8 an dem Wandelement 1 dargestellt. Das Werkzeug 28 ist gemäß dem Ausführungsbeispiel als ein Handwerkzeug ausgebildet und weist einen Griff 30 und einen Werkzeugkopf 32 auf. Der Werkzeugkopf 32 ist derart ausgebildet, dass er in den Innenbereich 24 des Verbindungselementes 8 hineinragen kann. Insbesondere kann das Verbindungselement 8 auf dem Werkzeugkopf 32 zum Durchführen einer Montage angeordnet werden. Durch das Innenprofil 26 ist das Verbindungselement 8 auf dem Werkzeug 28 verdrehsicher positionierbar. Hierdurch kann eine Drehbewegung des Werkzeugs 28 unmittelbar auf das Verbindungselement 8 übertragen werden.

Gemäß einer alternativen Ausgestaltung kann das Werkzeug 28 ein automatisiertes Werkzeug sein, welches beispielsweise an einem Manipulatorarm bzw. einem Montageroboter angeordnet ist.

Die Fig. 4 veranschaulicht in einer schematischen Schnittdarstellung eine Verbindungsanordnung 34. Die Verbindungsanordnung 34 weist ein Wandelement 1 mit einem Verbindungselement 8 in einem eingesetzten Zustand auf. Im eingesetzten Zustand ist das Verbindungselement 8 relativ zum Wandelement 1 verdreht und somit am Wandelement 1 arretiert. Durch das Zusammenwirken der Konterabschnitte 6 mit den Anpressrampen 16 entsteht eine axial in Richtung der Symmetrieachse S gerichtete Anpresskraft auf die erste Dichtfläche 14. Hierdurch wird der O-Ring 14 zwischen dem Dichtungsabschnitt 12 und dem Wandelement 1 zusammengedrückt, wodurch eine fluiddichte Kopplung entsteht.

Das Verbindungselement 8 weist eine zweite Dichtfläche 22 auf, welche gemäß einem sogenannten SAE 18 Anschlusssystem ausgeprägt ist.

Die Öffnung 2 des Wandelementes 1 und die Anpressrampen 16 des Verbindungsabschnitts 10 bilden gemäß dem Ausführungsbeispiel ein Bajonettverschluss aus, welcher durch eine Steck-Dreh-Bewegung lösbar arretierbar ist.

Die Fig. 5 zeigen perspektivische Darstellungen von erfindungsgemäßen Verbindungselementen 8 gemäß weiteren Ausführungsformen. Es werden mögliche Ausgestaltungen der zweiten Dichtfläche 22 veranschaulicht. In Fig. 5a ist ein Verbindungselement 8 mit einem sogenannten NQ-PS3 Anschlusssystem als eine zweite Dichtfläche 22 dargestellt. Die Fig. 5b zeigt ein Verbindungselement 8 mit einer zweiten Dichtfläche 22, welche zum Anschließen eines sogenannten NQ-V2 Anschlusssystems ausgestaltet ist.

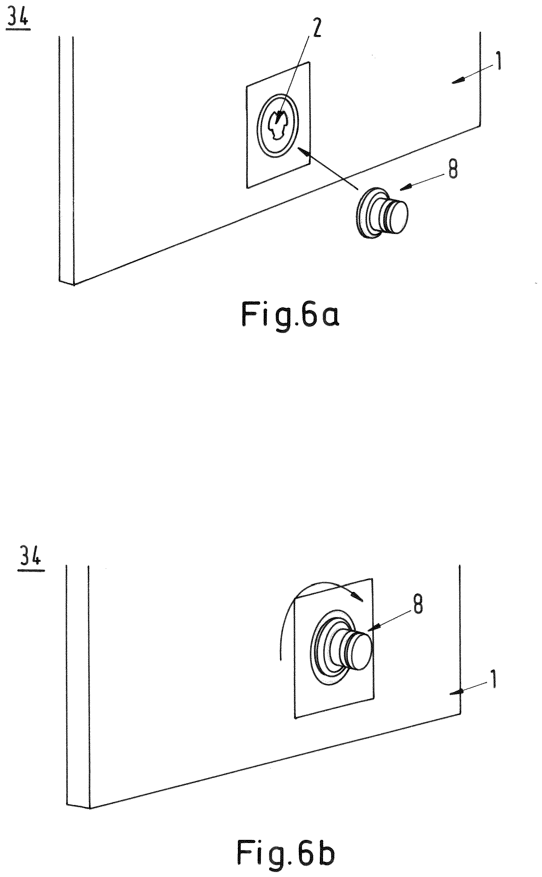

In der Fig. 6a und Fig. 6b sind Darstellungen von Verbindungsanordnungen 34 zum Veranschaulichen des erfindungsgemäßen Verfahrens gezeigt. Die Pfeile verdeutlichen hierbei die möglichen Bewegungsabläufe.

In einem ersten Schritt des Verfahrens wird das Verbindungselement 8 auf einem Werkzeugkopf 32 angeordnet und in die Öffnung 2 des Wandelements 1 gesetzt.

In einem weiteren Schritt wird das Werkzeug 28 im Uhrzeigersinn gedreht. Durch das Innenprofil 26 des Verbindungselements 8 kann die Drehbewegung des Werkzeugs 28 unmittelbar auf das Verbindungselement 8 übertragen werden, wodurch das Verbindungselement 8 mit dem Wandelement 1 verrastet und somit arretiert wird.

Die Erfindung ist nicht auf eine der vorbeschriebenen Ausführungsformen beschränkt, sondern in vielfältiger Weise abwandelbar.

Beispielsweise kann das Verbindungselement 8 einteilig oder mehrteilig ausgestaltet sein. Das Verbindungselement 8 und das Wandelement 1 können aus einem Kunststoff oder einem Metall bestehen.

Das erfindungsgemäße Verfahren kann automatisiert oder manuell zum Durchführen der Montage erfolgen.

### Bezugszeichenliste

- 1: Wandelement
- 2: Öffnung
- 4: Aussparung
- 6: Konterabschnitt
- 8: Verbindungselement
- 10: Verbindungsabschnitt
- 12: Dichtungsabschnitt
- 14: erste Dichtfläche
- 16: Anpressrampe / Vorsprung
- 18: Rastelement
- 20: Endabschnitt des Verbindungselementes
- 22: zweite Dichtfläche
- 24: Innenbereich des Verbindungselementes
- 26: Innenprofil des Verbindungselementes
- 28: Werkzeug
- 30: Griff des Werkzeugs
- 32: Werkzeugkopf
- 34: Verbindungsanordnung

- S: Symmetrieachse

## Patentansprüche

1. Verbindungsanordnung (34) zum Ausbilden einer fluidführenden Verbindung zwischen einem Behälter und einer Fluidleitung aufweisend
ein in oder an einer Behälterwand des Behälters anordenbares Wandelement (1) mit einer Öffnung (2) und
aufweisend ein rohrförmiges Verbindungselement (8) mit zwei Dichtflächen (14, 22), wobei das Verbindungselement (8) endseitig einen Dichtungsabschnitt (12) aufweist, welcher umfangsseitig am Verbindungselement (8) angeordnet ist und eine axial ausgerichtete Dichtfläche (14) aufweist, und wobei das Verbindungselement (8) an einem dem Dichtungsabschnitt (12) entgegengesetzten Ende (20) eine umfangsseitige zweite Dichtfläche (22) aufweist, wobei das Verbindungselement (8) im Bereich der ersten Dichtfläche (14) einen Verbindungsabschnitt (10) zum Einsetzen in die Öffnung (2) des Wandelements (1) und zum Verbinden mit dem Wandelement (1) aufweist, **dadurch gekennzeichnet, dass** das rohrförmige Verbindungselement (8) ein Innenprofil (26) zum verdrehsicheren Aufnehmen eines Werkzeugkopfes (32) aufweist.

2. Verbindungsanordnung nach Anspruch 1, wobei der Verbindungsabschnitt (10) mit dem Wandelement (1) formschlüssig oder kraftschlüssig verbindbar ist.

3. Verbindungsanordnung nach Anspruch 1 oder 2, wobei der Verbindungabschnitt (10) des Verbindungselementes (8) und die Öffnung (2) des Wandelements (1) als ein Bajonettverschluss ausgestaltet sind.

4. Verbindungsanordnung nach Anspruch 3, wobei die Öffnung (2) des Wandelements (1) mindestens eine Aussparung (4) zum Aufnehmen von mindestens einem Vorsprung (16) des Verbindungsabschnitts (10) aufweist und das Verbindungselement (8) durch ein Verdrehen des Verbindungselements (8) entlang einer Symmetrieachse (S) gegenüber dem Wandelement (1) am Wandelement (1) lösbar oder unlösbar arretierbar ist.

5. Verbindungsanordnung nach einem der Ansprüche 1 bis 4, wobei im verbundenen Zustand zwischen dem Dichtungsabschnitt (12) des Verbindungselements (8) und dem Wandelement (1) eine fluiddichte Dichtzone ausbildbar ist.

6. Verbindungsanordnung nach einem der Ansprüche 1 bis 5, wobei die zweite Dichtfläche (22) dazu ausgebildet ist eine Fluidleitung aufzunehmen.

7. Verbindungsanordnung nach einem der Ansprüche 1 bis 6, wobei der Behälter ein Tank, ein Gefäß, ein Raum oder zumindest ein Bereich einer Karosserie ist.

8. Verbindungsanordnung nach einem der Ansprüche 1 bis 7, wobei die zweite Dichtfläche (22) als ein SAE-Verbindung, eine VDA-Verbindung, ein Schlauchstutzen oder eine V2-Verbindung ausgeformt ist.

9. Verbindungsanordnung nach einem der Ansprüche 1 bis 8, wobei der Verbindungsabschnitt (10) des Verbindungselementes (8) mindestens ein Rastelement (18) zum Ausbilden einer Rastverbindung mit dem Wandelement (1) aufweist.

10. Verbindungsanordnung nach einem der Ansprüche 1 bis 9, wobei das Wandelement (1) in eine Behälterwand des Behälters einlassbar, als ein Abschnitt der Behälterwand oder stoffschlüssig mit der Behälterwand verbindbar ist.

11. Verfahren zum fluidführenden Verbinden von einem rohrförmigen Verbindungselement (8) mit einem Wandelement (1), **dadurch gekennzeichnet, dass**
- ein Werkzeugkopf (32) eines Werkzeugs (28) in einem Innenbereich (24) des rohrförmigen Verbindungselements (8) verdrehsicher angeordnet wird,
- das Verbindungselement (8) durch den Werkzeugkopf (32) in einer Öffnung (2) des Wandelements (1), die sich durch das Wandelement (1) hindurch erstreckt, derart angeordnet wird, dass ein Verbindungsabschnitt (10) des Verbindungselements (8) durch die Öffnung (2) hindurchragt und
- das Verbindungselement (8) durch eine Rotationsbewegung des Werkzeugkopfes (32) relativ zum Wandelement (1) verdreht und am Wandelement (1) arretiert wird.

## Claims

1. Connecting arrangement (34) for forming a fluid-conducting connection between a container and a fluid line, comprising
a wall element (1), which can be arranged in or on a container wall of the container and which has an opening (2), and
comprising a tubular connecting element (8) having two sealing surfaces (14, 22), the connecting element (8) comprising, at an end side, a seal portion (12) which is arranged circumferentially on the connecting element (8) and which comprises an axially oriented sealing surface (14), and the connecting element (8) comprising, at an end (20) opposite the seal portion (12), a circumferential second sealing surface (22), the connecting element (8) comprising, in the region of the first sealing surface (14), a connecting portion (10) for insertion into the opening (2) of the wall element (1) and for connection to the wall element (1), **characterized in that** the tubular connecting element (8) has an inner profile (26) for receiving a tool head (32) in a rotationally secure manner.

2. Connecting arrangement according to Claim 1, the connecting portion (10) being able to be connected to the wall element (1) in a positively locking or force-fitting manner.

3. Connecting arrangement according to Claim 1 or 2, the connecting portion (10) of the connecting element (8) and the opening (2) of the wall element (1) being designed as a bayonet closure.

4. Connecting arrangement according to Claim 3, the opening (2) of the wall element (1) comprising at least one cutout (4) for receiving at least one protrusion (16) of the connecting portion (10), and the connecting element (8) being able to be locked on the wall element (1) in a releasable or nonreleasable manner as a result of a rotation of the connecting element (8) in relation to the wall element (1) along an axis of symmetry (S).

5. Connecting arrangement according to one of Claims 1 to 4, a fluid-tight sealing zone being able to be formed between the seal portion (12) of the connecting element (8) and the wall element (1) in the connected state.

6. Connecting arrangement according to one of Claims 1 to 5, the second sealing surface (22) being configured to receive a fluid line.

7. Connecting arrangement according to one of Claims 1 to 6, the container being a tank, a vessel, a room or at least one region of a vehicle body.

8. Connecting arrangement according to one of Claims 1 to 7, the second sealing surface (22) being formed as an SAE connection, a VDA connection, a hose connector or a V2 connection.

9. Connecting arrangement according to one of Claims 1 to 8, the connecting portion (10) of the connecting element (8) comprising at least one latching element (18) for forming a latching connection to the wall element (1).

10. Connecting arrangement according to one of Claims 1 to 9, the wall element (1) being able to be recessed into a container wall of the container, as a portion of the container wall or being able to be connected to the container wall in a materially bonded manner.

11. Method for the fluid-conducting connection of a tubular connecting element (8) to a wall element (1), **characterized in that**
- a tool head (32) of a tool (28) is arranged in an inner region (24) of the tubular connecting element (8) in a rotationally secure manner,
- the tool head (32) is used to arrange the connecting element (8) in an opening (2) of the wall element (1), which extends through the wall element (1), in such a way that a connecting portion (10) of the connecting element (8) projects through the opening (2) and
- the connecting element (8) is rotated as a result of a rotational movement of the tool head (32) relative to the wall element (1) and is locked on the wall element (1).

## Revendications

1. Ensemble de liaison (34) destiné à former une liaison fluidique entre un contenant et une conduite de fluide, ledit ensemble de liaison comportant
un élément de paroi (1) qui peut être disposé dans ou sur une paroi de contenant et qui est pourvu d'une ouverture (2) et
un élément de liaison tubulaire (8) qui comporte deux surfaces d'étanchéité (14, 22), l'élément de liaison (8) comportant à son extrémité une portion d'étanchéité (12) qui est disposée sur la circonférence de l'élément de liaison (8) et qui comporte une surface d'étanchéité (14) orientée axialement, et l'élément de liaison (8) comportant une deuxième surface d'étanchéité périphérique (22) à une extrémité (20) opposée à la portion d'étanchéité (12), l'élément de liaison (8) comportant dans la zone de la première surface d'étanchéité (14) une portion de liaison (10) destinée à être insérée dans l'ouverture (2) de l'élément de paroi (1) et à être reliée à l'élément de paroi (1), **caractérisé en ce que** l'élément de liaison tubulaire (8) présente un profilé intérieur (26) destiné à recevoir une tête d'outil (32) en l'empêchant de tourner.

2. Ensemble de liaison selon la revendication 1, la portion de liaison (10) pouvant être reliée à l'élément de paroi (1) par complémentarité de formes ou en force.

3. Ensemble de liaison selon la revendication 1 ou 2, la portion de liaison (10) de l'élément de liaison (8) et l'ouverture (2) de l'élément de paroi (1) étant réalisés sous la forme d'une fermeture à baïonnette.

4. Ensemble de liaison selon la revendication 3, l'ouverture (2) de l'élément de paroi (1) comportant au moins un évidement (4) destiné à recevoir au moins une saillie (16) de la portion de liaison (10) et l'élément de liaison (8) étant bloqué de manière amovible ou non amovible sur l'élément de paroi (1) par rotation de l'élément de liaison (8) le long d'un axe de symétrie (S) par rapport à l'élément de paroi (1).

5. Ensemble de liaison selon l'une des revendications 1 à 4, une zone d'étanchéité étanche aux fluides pouvant être formée, à l'état relié, entre la portion d'étanchéité (12) de l'élément de liaison (8) et l'élément de paroi (1).

6. Ensemble de liaison selon l'une des revendications 1 à 5, la deuxième surface d'étanchéité (22) étant conçue pour recevoir une conduite de fluide.

7. Ensemble de liaison selon l'une des revendications 1 à 6, le contenant étant un réservoir, un récipient, un espace ou au moins une zone d'une carrosserie.

8. Ensemble de liaison selon l'une des revendications 1 à 7, la deuxième surface d'étanchéité (22) étant formée comme une liaison SAE, une liaison VDA, un raccord de tuyau ou une liaison V2.

9. Ensemble de liaison selon l'une des revendications 1 à 8, la portion de liaison (10) de l'élément de liaison (8) comportant au moins un élément d'encliquetage (18) destiné à former une liaison d'encliquetage avec l'élément de paroi (1).

10. Ensemble de liaison selon l'une des revendications 1 à 9, l'élément de paroi (1) pouvant être inséré dans une paroi de contenant, en tant que portion de la paroi de contenant, ou pouvant être relié à la paroi de contenant par une liaison de matière.

11. Procédé de liaison fluidique d'un élément de liaison tubulaire (8) à un élément de paroi (1), **caractérisé en ce que**
- une tête d'outil (32) d'un outil (28) est disposée dans une zone intérieure (24) de l'élément de liaison tubulaire (8) de manière à l'empêcher de tourner,
- l'élément de liaison (8) est disposé par la tête d'outil (32) dans une ouverture (2) de l'élément de paroi (1) qui s'étend à travers l'élément de paroi (1) de manière à ce qu'une portion de liaison (10) de l'élément de liaison (8) fasse saillie de l'ouverture (2) et
- l'élément de liaison (8) est entraîné en rotation par rapport à l'élément de paroi (1) par un mouvement de rotation de la tête d'outil (32) et est verrouillé sur l'élément de paroi (1).
